# EUROPEAN PATENT APPLICATION

(11) **EP 4 847 537 A1**
(43) Date of publication of application: **02.12.2026**
(21) Application number: 25869664.0
(22) Date of filing: 10.06.2025
(51) Int. Cl.: C08B 37/08

(54) **PREPARATION METHOD FOR CHONDROITIN SULFATE SODIUM AND USE THEREOF**

(30) Priority: 18.03.2025 CN 202510314994
(71) Applicant: YANTAI DONGCHENG BIOCHEMICALS CO., LTD, Yantai, Shandong 264006 (CN); Jiangnan University, Wuxi, Jiangsu 214122 (CN)
(72) Inventor: YANG, De, Yantai, Shandong 264000 (CN); SHAN, Yi, Yantai, Shandong 264000 (CN); GAO, Yan, Yantai, Shandong 264000 (CN); LIU, Xiaojie, Yantai, Shandong 264000 (CN); WANG, Nan, Yantai, Shandong 264000 (CN); WU, Jing, Wuxi, Jiangsu 214122 (CN)
(74) Representative: Santarelli
(86) International application number: PCT/CN2025/100102
(87) International publication number: WO 2026/194076

(57) **Abstract**

Disclosed is a preparation method for sodium chondroitin sulfate and use thereof. The preparation of sodium chondroitin sulfate includes: dispersing unsulfated sodium chondroitin with an organic solvent, adding a sulfonating reagent so as to carry out a sulfonation reaction, and then terminating the reaction, carrying out centrifugation, and collecting precipitate; and then decolorizing and drying a collected precipitate to obtain sodium chondroitin sulfate. An average molecular weight of a final product obtained by the method is controllable, and a batch-to-batch product quality is stable. The sodium chondroitin sulfate is more suitable for absorption by a body, has high bioavailability, and offers higher safety and efficacy. Moreover, this method can be realized without complex extraction and purification processes. The sodium chondroitin sulfate has abundant sources, a uniform structure, stable quality, a mild reaction and a reasonable and controllable production cycle, and thus is suitable for large-scale commercial production.

## Description

### Technical Field

The present disclosure relates to a preparation method for sodium chondroitin sulfate and use thereof, belonging to the technical field of chondroitin sulfate.

### Background of the Invention

Chondroitin sulfate (ChS/CS) is a naturally derived bioactive macromolecule, which is widely distributed in almost all invertebrates and vertebrates. A glycan chain of chondroitin sulfate is composed of alternating disaccharide units of glucuronic acid (GlcA) or iduronic acid (IdoA) and N-acetylgalactosamine (GalNAc), and has sulfate groups of different numbers and at different positions, such as position 2 or 3 of GlcA or IdoA and position 4 or 6 of GalNAc. It has been demonstrated that chondroitin sulfate has a profound impact on many physiological processes such as inflammation, tumor progression and metastasis, vascular remodeling, antioxidation.

At present, animal tissues are used as raw materials (such as tissue from cattle, pigs, chickens, cartilaginous fish, sharks, rays, bony fish) in commercial industrial production of chondroitin sulfate. Although sources of raw materials are abundant, this also poses safety and quality problems. In fact, glycan chains of ChS from different sources may have different amounts of disaccharides and sulfate groups at different positions. Each type of ChS is not completely composed of an ideal disaccharide repeating unit, but is composed of multiple disaccharide structures present in varying contents. Even for known ChS samples, mainly composed of two types of disaccharide units in different percentages and with mono-sulfation at position 4 and mono-sulfation at position 6 of N-acetylgalactosamine, disaccharides with varying numbers and positions of sulfate groups in different percentages can also be found within the polysaccharide chains of ChS. Therefore, chondroitin sulfate from different sources has certain heterogeneity in relative molecular weight, charge density and chemical properties, thereby causing difficulties in a study of physical and chemical properties and structural characterization of ChS, and introducing adverse factors for quality control over ChS.

In addition, factors such as the source of raw materials and differences in structural characteristics (such as composition and proportion of disaccharides, the position of sulfate groups) will also affect overall bioavailability and pharmacokinetic activity of chondroitin sulfate. Chondroitin sulfate with different structures has been confirmed to have different properties. For example, ChS with sulfation at position 4 can inhibit presentation of RANTES on cell surfaces or can bind to erythrocytes infected by *Plasmodium falciparum*. Therefore, it is very important to determine the source of chondroitin sulfate.

Shark-derived chondroitin sulfate has been confirmed to have anti-angiogenic and antitumor activities, and neurite growth-promoting activities in animals and humans, and has remarkable effects in treatment of osteoarthritis, rheumatoid arthritis, progressive systemic sclerosis and neurovascular glaucoma. Therefore, chondroitin sulfate has now been widely used. Identification of functional groups shows that chondroitin isolated from shark cartilage is predominantly chondroitin sulfate C, that is, its main component is chondroitin with mono-sulfation at position 6 of GalNAc, thus making structural characteristics of the chondroitin sulfate C significantly different from chondroitin sulfate from other sources. ChS derived from cattle, pigs, chickens, whales and the like is predominantly chondroitin sulfate A, and its main component is chondroitin with sulfation at position 4 of GalNAc, and squid-derived ChS is predominantly chondroitin sulfate E, and its main component is chondroitin with disulfation at positions 4 and 6 of GalNAc, which may be the main reason why the function of the chondroitin sulfate C is different from those of chondroitin from other sources. However, shark resources are limited, and supply of shark-derived chondroitin sulfate is far below market demand. Therefore, shark-like chondroitin with similar structural characteristics similar to those of natural shark chondroitin has become a current development hotspot.

Disclosed in a European patent with a publication number of EP1304338B1 is a method for obtaining chondroitin sulfate with sulfation at position 6 of GalNAc by microbial fermentation. In this method, *Escherichia coli* K4 polysaccharide is used as a starting material, which undergoes acid treatment and purification to obtain an acidic polysaccharide, and then positions 4 and 6 of GalNAc and positions 2 and 3 of GlcA are protected by dibenzylation and O-acetylation, and dibenzylidene is separated by acetic acid treatment. Positions 4 and 6 of GalNAc are deprotected, and then sulfation is carried out to obtain chondroitin sulfate C with sulfonation at position 6 of GalNAc. A process of this method requires a strategy of two-step protection and deprotection, so that a process is complicated, and an introduction of more reagents increases difficulty of subsequent purification, which is not suitable for industrial mass production. Also disclosed in Chinese patent CN103582653B is a method for producing chondroitin sulfate with sulfation at position 6 of GalNAc. In this method, firstly, sodium chondroitin salt is converted into its free acid or pyridine salt or methyl ester. Afterwards, a compound with repeating disaccharide units is obtained under acid catalysis. Afterwards, hydroxyl groups at positions 2' and 3' of glucuronic acid units are protected. orthoester functional groups are rearranged to obtain ester derivatives. Sulfation is then carried out, and O-acyl groups present in the compound obtained in the previous step are removed, thereby yielding sodium chondroitin sulfate in which all N-acetyl-D-galactosamine units in the same polysaccharide chain are randomly sulfated or monosulfated at position 4 or 6. Although this method can also effectively control a high proportion of single components, a sulfonation process of this method needs a strategy of protection, deprotection and rearrangement of orthoester functional groups, so that the process is complicated, which is not suitable for industrial mass production.

### Summary of the Invention

In order to solve the above problems, the present disclosure provides a brand-new preparation method for sodium chondroitin sulfate. The method, realizes sulfonation of chondroitin by one-step sulfonation by taking unsulfated sodium chondroitin as a starting material, and using a sulfonation strategy without protecting groups. A proportion of sodium chondroitin sulfate with independent sulfonation at position 6 of GalNAc in the obtained sodium chondroitin sulfate can reach 60% or above.

The independent sulfonation at position 6 of GalNAc in the present disclosure refers to a situation that sulfation only occurs at position 6 of GalNAc in sodium chondroitin sulfate (i.e., a disaccharide structure is 4GlcAβ1,3GalNAc6Sβ1).

Specifically, the present disclosure provides a preparation method for sodium chondroitin sulfate, where the preparation method includes the following steps of:
step 1) sulfonation: dispersing unsulfated sodium chondroitin with an organic solvent, adding a sulfonating reagent so as to carry out a sulfonation reaction, and then terminating the reaction, carrying out centrifugation, and collecting precipitate; and
step 2) post-treatment: decolorizing and drying the precipitate collected in step 1 to obtain sodium chondroitin sulfate,
where the sulfonating reagent in step 1 is preferably selected from one or more of concentrated sulfuric acid, sulfur trioxide trimethylamine complex, CAS: 3162-58-1), and pyridine sulfur trioxide complex (CAS: 26412-87-3).

Further, the organic solvent in step 1 is selected from one or more of N, N-dimethylformamide or formamide.

Further, a weight ratio of the unsulfated sodium chondroitin to the sulfonating reagent (i.e., W_{sodium chondroitin}: W_{sulfonating reagent}, g/g) in step 1 is ≤1: 0.5; preferably 1:(0.5 to 5) (such as 1:0.5, 1:0.6, 1:0.7, 1:0.8, 1:0.9, 1:1, 1:1.1, 1:1.2, 1:1.3, 1:1.4, 1:1.5, 1:1.6, 1:1.7, 1:1.8, 1:1.9, 1:2, 1:2.1, 1:2.2, 1:2.3, 1:2.4, 1:2.5, 1:2.6, 1:2.7, 1:2.8, 1:2.9, 1:3, 1:3.1, 1:3.2, 1:3.3, 1:3.4, 1:3.5, 1:3.6, 1:3.7, 1:3.8, 1:3.9, 1:4, 1:4.1, 1:4.2, 1:4.3, 1:4.4, 1:4.5, 1:4.6, 1:4.7, 1:4.8, 1:4.9, 1:5, or any non-integer ratio that may be rounded to the above-mentioned ratios).

In some preferred embodiments, the weight ratio (g/g) of the unsulfated sodium chondroitin to the sulfonating reagent in step 1 is about W_{sodium chondroitin}:W_{sulfonating reagent} =1:(1 to 5).

Further, it can be understood that the sulfonating reagent in step 1 can be directly added to an organic solvent dispersion of the above-mentioned unsulfated sodium chondroitin, or the sulfonating reagent can be dissolved in an organic solvent which is the same as or different from that used for dispersing the above unsulfated sodium chondroitin, and then the dissolved sulfonating reagent is added to the organic solvent dispersion of the unsulfated sodium chondroitin.

In some specific embodiments, the sulfonating reagent is typically dissolved in an appropriate amount of organic solvent which is different from that used for dispersing the above-mentioned unsulfated sodium chondroitin, and then the dissolved sulfonating reagent is added to the organic solvent dispersion of the unsulfated sodium chondroitin.

Further, in some specific embodiments, the sulfonating reagent in step 1 is selected from one or more of concentrated sulfuric acid, sulfur trioxide trimethylamine complex and pyridine sulfur trioxide complex, and the organic solvents in step 1 are N, N-dimethylformamide and formamide. In other specific embodiments, the sulfonating reagent in step 1 is preferably one or more of concentrated sulfuric acid, trimethylamine sulfide complex and pyridine sulfur trioxide complex, and the organic solvent in step 1 is N, N-dimethylformamide or formamide.

Further, in some specific embodiments, the sulfonating reagent in step 1 is pyridine sulfur trioxide complex, and the organic solvent in step 1 is N, N-dimethylformamide. The sulfonating reagent is dissolved in formamide, and then the dissolved sulfonating reagent is added to an organic solvent dispersion of unsulfated sodium chondroitin.

Further, in some other specific embodiments, the sulfonating reagent in step 1 is pyridine sulfur trioxide complex, and the organic solvent in step 1 is formamide. The sulfonating reagent is dissolved in N, N-dimethylformamide, and then the dissolved sulfonating reagent is added to an organic solvent dispersion of the unsulfated sodium chondroitin. Further, a weight-volume ratio (g/ml) of the unsulfated sodium chondroitin to the organic solvent in step 1 is about W_{sodium chondroitin}:V_{organic solvent}=1:(4 to 50) (such as 1:4, 1:5, 1:6, 1:7, 1:8, 1:9, 1:10, 1:11, 1:12, 1:13, 1:14, 1:15, 1:16, 1:17, 1:18, 1:19, 1:20, 1:21, 1:22, 1:23, 1:24, 1:25, 1:26, 1:27, 1:28, 1:29, 1:30, 1:31, 1:32, 1:33, 1:34, 1:35, 1:36, 1:37, 1:38, 1:39, 1:40, 1:41, 1:42, 1:43, 1:44, 1:45, 1:46, 1:47, 1:48, 1:49 or 1:50, or any non-integer ratio that may be rounded to the above-mentioned ratios).

In some preferred embodiments, the weight-volume ratio (g/ml) of the unsulfated sodium chondroitin to the organic solvent in step 1 is about W_{sodium chondroitin}: V_{organic solvent} =1:(8 to 20).

Further, a temperature for the sulfonation reaction in step 1 is about 20°C to 50°C (such as 20°C, 21°C, 22°C, 23°C, 24°C, 25°C, 26°C, 27°C, 28°C, 29°C, 30°C, 31°C, 32°C, 33°C, 34°C, 35°C, 36°C, 37°C, 38°C, 39°C, 40°C, 41°C, 42°C, 43°C, 44°C, 45°C, 46°C, 47°C, 48°C, 49°C, 50°C, or any two temperature ranges within this interval). Preferably, the temperature for the sulfonation reaction in step 1 is about 30°C to 40°C.

Further, a time for the sulfonation reaction in step 1 is about 0.5 h to 6 h (such as 0.5 h, 1 h, 1.5 h, 2 h, 2.5 h, 3 h, 3.5 h, 4 h, 4.5 h, 5 h, 5.5 h, 6 h, or any non-integer time that may be rounded to the above-mentioned time points). Preferably, the time for the sulfonation reaction in step 1 is about 2 h to 4 h.

Further, the sulfonation reaction in step 1 is terminated using anhydrous ethanol.

Further, in the above-mentioned termination reaction, 3 times to 10 times (such as 3 times, 4 times, 5 times, 6 times, 7 times, 8 times, 9 times, 10 times, or any non-integer ratio that may be rounded to the above-mentioned multiples) the volume of anhydrous ethanol relative to an entire sulfonation reaction system can be added to the entire sulfonation reaction system so as to terminate the reaction. Preferably, in the above-mentioned termination reaction, 4 times to 8 times the volume of anhydrous ethanol relative to the entire sulfonation reaction system can be added to the whole sulfonation reaction system so as to terminate the reaction.

Further, a centrifugation speed in step 1 is about 4000 rpm to 8000 rpm (such as 4000 rpm, 5000 rpm, 6000 rpm, 7000 rpm, 8000 rpm). Preferably, the centrifugation speed in step 1 is 5000 rpm to 6000 rpm.

In order to better remove solvent residue in precipitate, in some specific embodiments, precipitate collected by centrifugation is washed once or multiple times using anhydrous ethanol.

Further, in step 2, decolorization is carried out using activated carbon fiber membranes or hydrogen peroxide.

In some preferred embodiments, in step 2, decolorization is carried out using activated carbon fiber membranes. In some other preferred embodiments, in step 2, decolorization is carried out using hydrogen peroxide.

In some specific embodiments, an appropriate amount of purified water can be taken before decoloration so as to dissolve the precipitate collected in step 1.

Further, the drying in step 2 is freeze drying or spray drying.

Further, the unsulfated sodium chondroitin in step 1 is commercially available unsulfated sodium chondroitin.

Further, the unsulfated sodium chondroitin in step 1 is unsulfated sodium chondroitin obtained via microbial fermentation.

In some specific embodiments, the unsulfated sodium chondroitin in step 1 is obtained by extracting fermentation broth obtained after fermentation using *E. coli* DH001.

Further, the extraction includes necessary steps such as ultrafiltration, acidolysis and purification. The *E. coli* DH001 was deposited on September 26, 2024 at the China General Microbiological Culture Collection Center, with an accession number of CGMCC No.32081, a deposit address of Beijing, China, and taxonomic designation of *Escherichia coli*.

In some specific embodiments, obtaining the unsulfated sodium chondroitin may include the following processes:
Fermentation: fermentation is carried out using *E. coli* DH001 to obtain fermentation broth containing unsulfated sodium chondroitin;
Ultrafiltration: the fermentation broth is centrifuged, supernatant is collected, and ultrafiltration is carried out to obtain filtrate;
Acidolysis: an acidolysis agent is added to the filtrate so as to carry out acidolysis, and supernatant is collected by centrifugation; and
Purification: the supernatant after acidolysis is purified using ion exchange to obtain unsulfated sodium chondroitin.

It can be understood that the above-mentioned fermentation process further involves the use of a necessary culture medium for maintaining the growth metabolism and fermentation of strains. The culture medium contains a carbon source, a nitrogen source, inorganic salts and trace elements necessary for growth, etc., which may be any option provided in the prior art and should not be regarded as limiting the present disclosure.

In some preferred embodiments, the carbon source involved in the above-mentioned fermentation process is glucose.

In some other preferred embodiments, the nitrogen source involved in the above-mentioned fermentation process is an organic nitrogen source and/or an inorganic nitrogen source. Preferably, the organic nitrogen source may be yeast extract powder, and/or the inorganic nitrogen source may be ammonium sulfate. More preferably, the nitrogen sources involved in the above-mentioned fermentation process are yeast extract powder and ammonium sulfate.

In some other preferred embodiments, the above-mentioned fermentation process further involves the use of inorganic salts and trace elements necessary for the growth of strains, such as phosphorus, magnesium, and iron. In some preferred embodiments, these inorganic salts and trace elements can be selected from one or more of potassium dihydrogen phosphate, magnesium sulfate heptahydrate and ferrous sulfate heptahydrate.

In some specific embodiments, the fermentation broth in the above-mentioned fermentation process is obtained by fermentation using *E. coli* DH001 in a culture medium containing a carbon source, a nitrogen source, inorganic salts and trace elements necessary for growth.

In some more specific embodiments, the fermentation broth in the above-mentioned fermentation process is obtained by fermentation using *E. coli* DH001 in a culture medium containing glucose as a carbon source, yeast extract powder and ammonium sulfate as nitrogen sources, and inorganic salts and trace elements necessary for growth.

Further, the centrifugation speed in the above-mentioned ultrafiltration process is about 6000 rpm to 20000 rpm (such as 6000 rpm, 7000 rpm, 8000 rpm, 9000 rpm, 10000 rpm, 11000 rpm, 12000 rpm, 13000 rpm, 14000 rpm, 15000 rpm, 16000 rpm, 17000 rpm, 18000 rpm, 19000 rpm, and 20000 rpm). Preferably, the centrifugation speed in the above-mentioned ultrafiltration process is 8000 rpm to 10000 rpm.

Further, a pore size of a ultrafiltration membrane in the above-mentioned ultrafiltration process is 5 kDa to 30 kDa (such as 5 kDa, 6 kDa, 7 kDa, 8 kDa, 9 kDa, 10 kDa, 11 kDa, 12 kDa, 13 kDa, 14 kDa, 15 kDa, 16 kDa, 17 kDa, 18 kDa, 19 kDa, 20 kDa, 21 kDa, 22 kDa, 23 kDa, 24 kDa, 25 kDa, 26 kDa, 27 kDa, 28 kDa, 29 kDa, 30 kDa). Preferably, the pore size of the ultrafiltration membrane in the above-mentioned ultrafiltration process is 10 kDa to 20 kDa.

Further, the above-mentioned acidolysis process refers to acidolysis of ultrafiltered filtrate. The acidolysis agent may be an organic acid or inorganic acid reagent.

Furthermore, the acidolysis agent in the above-mentioned acidolysis process is selected from one or more of sulfuric acid, hydrochloric acid and acetic acid.

Further, the acidolysis pH of the above-mentioned acidolysis process is about 1.0 to 5.0 (such as 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0). Preferably, the acidolysis pH of the above-mentioned acidolysis process is about 1.0 to 2.0.

Further, an acidolysis time of the above-mentioned acidolysis process is about 2 h to 10 h (such as 2 h, 3 h, 4 h, 5 h, 6 h, 7 h, 8 h, 9 h, and 10 h).

Further, an acidolysis temperature for the above-mentioned acidolysis process is about 50°C to 90°C (such as 50°C, 51°C, 52°C, 53°C, 54°C, 55°C, 56°C, 57°C, 58°C, 59°C, 60°C, 61°C, 62°C, 63°C, 64°C, 65°C, 66°C, 67°C, 68°C, 69°C, 70°C, 70°C, 72°C, 73°C, 74°C, 75°C, 76°C, 77°C, 78°C, 79°C, 80°C, 81°C, 82°C, 83°C, 84°C, 85°C, 86°C, 87°C, 88°C, 89°C, 90°C, or any two temperature ranges within this interval).

Further, the ion exchange in the above-mentioned purification process is anion resin exchange, preferably D280 anion exchange or D980 anion exchange.

Furthermore, an eluent for ion exchange involved in the above-mentioned purification process is 1 mol/L to 3 mol/L (such as 1 mol/L, 2 mol/L, and 3 mol/L) of sodium chloride solution. In some specific embodiments, the eluent for ion exchange involved in the above-mentioned purification process is 2M sodium chloride solution.

Furthermore, the above-mentioned purification process may further include the following steps of re-ultrafiltration, concentration, drying, etc., that is, re-ultrafiltration is carried out on eluent obtained via ion exchange (for example, the pore size of the membrane for the ultrafiltration is 2 kDa to 30 kDa), and then the collected filtrate is concentrated and dried to obtain unsulfated sodium chondroitin. These processes are only for better or more optimal extraction of the unsulfated sodium chondroitin, and the number of times, sequence, process parameters, etc. of these processes should not be regarded as limiting the present disclosure.

Further, an average molecular weight of unsulfated sodium chondroitin obtained by fermentation using *E. coli* DH001 provided in the present disclosure is about 5 kDa to 30 kDa (such as 5 kDa, 6 kDa, 7 kDa, 8 kDa, 9 kDa, 10 kDa, 11 kDa, 12 kDa, 13 kDa, 14 kDa, 15 kDa, 16 kDa, 17 kDa, 18 kDa, 19 kDa, 20 kDa, 21 kDa, 22 kDa, 23 kDa, 24 kDa, 25 kDa, 26 kDa, 27 kDa, 28 kDa, 29 kDa, 30 kDa, or any non-integer kDa value that may be rounded to the above-mentioned integer kDa value, that is, the average molecular weight of the obtained unsulfated sodium chondroitin may be any integer or non-integer kDa value within the interval).

In some preferred embodiments, the average molecular weight of sodium chondroitin sulfate obtained using the method provided in the present disclosure is about 5 kDa to 30 kDa (such as 5 kDa, 6 kDa, 7 kDa, 8 kDa, 9 kDa, 10 kDa, 11 kDa, 12 kDa, 13 kDa, 14 kDa, 15 kDa, 16 kDa, 17 kDa, 18 kDa, 19 kDa, 20 kDa, 21 kDa, 22 kDa, 23 kDa, 24 kDa, 25 kDa, 26 kDa, 27 kDa, 28 kDa, 29 kDa, 30 kDa, or any non-integer kDa value that may be rounded to the above-mentioned integer kDa value, that is, the average molecular weight of the sodium chondroitin sulfate obtained using the method provided in the present disclosure may be any integer or non-integer kDa value within the interval).

In some preferred embodiments, a proportion of the sodium chondroitin sulfate with independent sulfonation at position 6 of GalNAc in the sodium chondroitin sulfate obtained using the method provided in the present disclosure is greater than 60% (such as 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, 100%, or any non-integer proportion that may be rounded to the above-mentioned proportions), that is, 60% or above (including 60%) of components in the sodium chondroitin sulfate obtained by the method provided in the present disclosure are the sodium chondroitin sulfate with independent sulfonation at position 6 of GalNAc. In some more preferred embodiments, the proportion of the sodium chondroitin sulfate with independent sulfonation at position 6 of GalNAc in the sodium chondroitin sulfate obtained by the method provided in the present disclosure ranges from 60% to 85%, that is, 60% to 85% of the components (including 60% and 85%) in the sodium chondroitin sulfate obtained by the method provided in the present disclosure are the sodium chondroitin sulfate with independent sulfonation at position 6 of GalNAc.

The present disclosure further provides a sulfation method for sodium chondroitin, where the sodium chondroitin is unsulfated and has an average molecular weight of about 5 kDa to 30 kDa, and the sulfation method includes the sulfonation (i.e., step 1) and post-treatment (i.e., step 2) processes described in any one of the above.

Specifically, the sulfation method for sodium chondroitin provided in the present disclosure includes the following steps:
step 1) sulfonation: dispersing sodium chondroitin with an organic solvent, adding a sulfonating reagent so as to carry out a sulfonation reaction, and then terminating the reaction, carrying out centrifugation, and collecting precipitate; and
step 2) post-treatment: decolorizing and drying the precipitate collected in step 1 to obtain sodium chondroitin sulfate,
where:
   the sodium chondroitin is unsulfated and has an average molecular weight is about 5 kDa to 30 kDa;
   the sulfonating reagent is preferably selected from one or more of concentrated sulfuric acid, sulfur trioxide trimethylamine complex (CAS: 3162-58-1), and pyridine sulfur trioxide complex (CAS: 26412-87-3); and
   the organic solvent is selected from one or more of N, N-dimethylformamide and/or formamide.

Further, the unsulfated sodium chondroitin is commercially available unsulfated sodium chondroitin.

Further, the unsulfated sodium chondroitin is unsulfated sodium chondroitin obtained via microbial fermentation.

In some specific embodiments, the unsulfated sodium chondroitin in step 1 is obtained by extracting fermentation broth obtained after fermentation using *E. coli* DH001. Further, the extraction includes necessary steps such as ultrafiltration, acidolysis and purification. The *E. coli* DH001 was deposited on September 26, 2024 at the China General Microbiological Culture Collection Center, with an accession number of CGMCC No.32081, a deposit address of Beijing, China, and taxonomic designation of *Escherichia coli*.

The present disclosure further relates to a use of the preparation method for sodium chondroitin sulfate according to any one of the above or the sulfation method for sodium chondroitin sulfate in preparation of sodium chondroitin sulfate with sulfation at position 6 of GalNAc. Preferably, the sodium chondroitin sulfate with sulfation at position 6 of GalNAc refers to sodium chondroitin sulfate with independent sulfonation at position 6 of GalNAc.

The present disclosure further relates to a preparation method for sodium chondroitin sulfate with an independent sulfonation proportion of higher than 60% at position 6 of GalNAc, where an average molecular weight of the sodium chondroitin sulfate is 5 kDa to 30 kDa, and the method includes the sulfonation (i.e., step 1) and post-treatment (i.e., step 2) processes described in any one of the above. More preferably, the present disclosure further relates to a preparation method for sodium chondroitin sulfate with an independent sulfonation proportion of 60% to 85% at position 6 of GalNAc, where an average molecular weight of the sodium chondroitin sulfate is 5 kDa to 30 kDa, and the method includes the sulfonation (i.e., step 1) and post-treatment (i.e., step 2) processes described in any one of the above.

The present disclosure further provides sodium chondroitin sulfate with an independent sulfonation proportion of higher than 60% at position 6 of GalNAc, where an average molecular weight of the sodium chondroitin sulfate is 5 kDa to 30 kDa, and the sodium chondroitin sulfate is obtained using the preparation method for sodium chondroitin sulfate or the sulfation method for the sodium chondroitin sulfate described in any one of the above. More preferably, the present disclosure further provides sodium chondroitin sulfate with an independent sulfonation proportion of 60% to 85% at position 6 of GalNAc, where an average molecular weight of the sodium chondroitin sulfate is 5 kDa to 30 kDa, and the sodium chondroitin sulfate is obtained using the preparation method for sodium chondroitin sulfate, or the sulfation method for sodium chondroitin, or the preparation method for sodium chondroitin sulfate with an independent sulfonation proportion of higher than 60% at position 6 of GalNAc, or the preparation method for sodium chondroitin sulfate with an independent sulfonation proportion of 60% to 85% at position 6 of GalNAc described in any one of the above.

The present disclosure has the following technical advantages:

The preparation method for sodium chondroitin sulfate or the sulfation method for sodium chondroitin provided in the present disclosure realizes directional sulfonation of chondroitin at position 6 of GalNAc by a "one-step" chemical sulfonation strategy by taking unsulfated sodium chondroitin as a starting material. The proportion of chondroitin sulfate with independent sulfonation at position 6 of GalNAc in the sodium chondroitin sulfate obtained by the method provided in the present disclosure is up to 60% or above (60% to 85%), and thus, the sodium chondroitin sulfate obtained based on this characteristic has a more uniform structure, and has higher safety and efficacy on the premise of ensuring more reliable quality, and the sodium chondroitin sulfate has high bioavailability due to the fact that its components are more suitable for absorption by the body.

The present disclosure has mild reaction conditions, does not require high temperature or high pressure, has simple operation steps, has low requirements for reaction devices, is green and environmentally-friendly, does not require a large amount of organic reagents, has stable and reliable reaction, high sulfonation rate of sodium chondroitin sulfate (can be up to 70% or above), and has controllable product molecular weight (preferably 5 kDa to 30 kDa), and batch-to-batch stable product quality, and thus is more suitable for industrial promotion and use.

Unsulfated sodium chondroitin derived from microbial fermentation is taken as a raw material in the method provided in the present disclosure, which can effectively avoid cross-contamination between organisms, and offer a stable raw material source, uniform structure, and safe and stable quality.

To sum up, the preparation method and the use provided in the present disclosure involve a simple chemical sulfonation process and a mild reaction, and allow for the directional site-specific sulfation of a final product without complex reaction steps (such as protection and deprotection strategies or a functional group rearrangement strategy), so that dependence on a production site and specific devices can be significantly reduced in the production process, thereby facilitating the control on production costs. Moreover, the production process is simple, and does not require complex chemical reagents (a protection group strategy requires about 15 organic reagents, while the present disclosure only requires 4 organic reagents), thereby reducing both the reagent usage cost and the recycling cost, while also lowering the potential for environmental pollution, and reducing possible residual chemical components in the final product, and thus further ensuring the safety of clinical applications.

### Brief Description of the Drawings

FIG. 1 is a graph showing results of glycan chain structures of chondroitin sulfate mentioned in the background;
FIG. 2 is a graph showing analysis results of a molecular weight of unsulfated sodium chondroitin obtained in Example 1;
FIG. 3 is a graph showing analysis results of a molecular weight of sodium chondroitin sulfate prepared in Example 2;
FIG. 4 is a graph showing analysis results of a molecular weight of sodium chondroitin sulfate prepared in Example 3;
FIG. 5 is a graph showing analysis results of a molecular weight of sodium chondroitin sulfate prepared in Example 4;
FIG. 6 is a graph showing analysis results of a molecular weight of sodium chondroitin sulfate prepared in Example 5;
FIG. 7 is a graph showing analysis results of a molecular weight of sodium chondroitin sulfate prepared in Example 6;
FIG. 8 is a graph showing analysis results of a molecular weight of sodium chondroitin sulfate prepared in Example 7;
FIG. 9 is a graph showing analysis results of a molecular weight of sodium chondroitin sulfate prepared in Example 8;
FIG. 10 is a graph showing analysis results of a molecular weight of sodium chondroitin sulfate prepared in Example 9;
FIG. 11 is a graph showing analysis results of a molecular weight of sodium chondroitin sulfate prepared in Comparative Example 1;
FIG. 12 is a graph showing analysis results of a molecular weight of sodium chondroitin sulfate prepared in Comparative Example 2;
FIG. 13 is a graph showing analysis results of a disaccharide content of the unsulfated sodium chondroitin obtained in Example 1;
FIG. 14 is a graph showing analysis results of a disaccharide content of the sodium chondroitin sulfate prepared in Example 2;
FIG. 15 is a graph showing analysis results of a disaccharide content of the sodium chondroitin sulfate prepared in Example 3;
FIG. 16 is a graph showing analysis results of a disaccharide content of the sodium chondroitin sulfate prepared in Example 4;
FIG. 17 is a graph showing analysis results of the disaccharide content of the sodium chondroitin sulfate prepared in Example 5;
FIG. 18 is a graph showing analysis results of a disaccharide content of the sodium chondroitin sulfate prepared in Example 6;
FIG. 19 is a graph showing analysis results of a disaccharide content of the sodium chondroitin sulfate prepared in Example 7;
FIG. 20 is a graph showing analysis results of a disaccharide content of the sodium chondroitin sulfate prepared in Example 8;
FIG. 21 is a graph showing analysis results of a disaccharide content of the sodium chondroitin sulfate prepared in Example 9;
FIG. 22 is a graph showing analysis results of a disaccharide content of the sodium chondroitin sulfate prepared in Comparative Example 1;
FIG. 23 is a graph showing analysis results of a disaccharide content of the sodium chondroitin sulfate prepared in Comparative Example 2;
FIG. 24 is an NMR carbon spectrum of the sodium chondroitin sulfate prepared in Example 2;
FIG. 25 is an NMR carbon spectrum of the sodium chondroitin sulfate prepared in Example 3; and
FIG. 26 is an NMR carbon spectrum of the sodium chondroitin sulfate prepared in Example 4.

### Detailed Description of Embodiments

The technical solutions in embodiments of the present disclosure will now be described clearly and fully hereinafter. Apparently, the embodiments described are only part of the embodiments of the present disclosure, not all of the embodiments. All other embodiments obtained by those of ordinary skill in the art based on the embodiments of the present disclosure without creative efforts shall fall within the protection scope of the present disclosure. The following specific embodiments provide a further description of the present disclosure.

### Example 1: Preparation of Sodium Chondroitin

(1) Fermentation: *E. coli* DH001 was used as a production strain and activated, and then the activated production strain was inoculated at an inoculum size of 1% to 5% into a 30 L seeding tank (containing culture medium 1, the components of which were glucose 5 g/L to 10 g/L; yeast extract powder 0.8 g/L to 2 g/l; ammonium sulfate 0.5 g/L to 1 g/L; potassium dihydrogen phosphate 10 g/L to 12 g/L; magnesium sulfate heptahydrate 3 g/L to 5 g/L; and defoamer 0.2 g/L to 0.3 g/L) so as to carry out fermentation. Culture was carried out for 8 h to 10 h until OD₆₀₀ reached 2.5 to 5. The seeds were transferred at an inoculum size of 5% to 10% into a 100 L fermentation tank (containing culture medium 2, the components of which were glucose 10 g/L to 15 g/L; yeast extract powder 2 g/L to 5 g/L; ammonium sulfate 1.5 g/L to 2.5 g/L; magnesium sulfate heptahydrate 4 g/L to 8 g/L; potassium dihydrogen phosphate 5 g/L to 10 g/L; ferrous sulfate heptahydrate 0.1 g/L to 0.3 g/L; sodium chloride 5 g/L to 10 g/L; and defoamer 0.2 g/L to 0.5 g/L) so as to carry out fermentation. Initial stirring was carried out at 200 rpm -300 rpm. An aeration rate was set to 1 vvm to 4 vvm. Dissolved oxygen was calibrated to 100%. Dissolved oxygen throughout the process was controlled at 15% to 30%. 25% (w/v) ammonia water was fed so as to control pH at 7.0 to 8.0. A glucose solution with a mass fraction of 40% to 60% was used as a carbon source to carry out fed-batch supplementation. Fermentation was carried out for 42 h to 48 h until OD₆₀₀ reached 110 to 135, and a final product was harvested to obtain fermentation broth. A content of (unsulfated) sodium chondroitin in the fermentation broth was 8 g/L to 10 g/L.
(2) Ultrafiltration: the fermentation broth obtained by fermentation was centrifuged at 8000 rpm. Supernatant was collected. Ultrafiltration was carried out with a 10 kDa ultrafiltration membrane until the conductivity of a concentrated solution was stable.
(3) Acidolysis: the pH of the ultrafiltered concentrated solution was adjusted to 1.5 with hydrochloric acid. The reaction was carried out at 80°C for 6 h and acidolysis was carried out. Centrifugation was carried out at 8000 rpm to remove precipitate so as to obtain supernatant.
(4) Purification: D280 anion exchange resin was added into the obtained supernatant. Adsorption was carried out under stirring for 2 h, followed by elution with 2 mol/L sodium chloride solution. The eluent was ultrafiltered with a 10 kDa ultrafiltration membrane until the conductivity of a concentrated solution was stable. The concentrated solution was concentrated and dried so as to obtain 410 g of sodium chondroitin (unsulfated sodium chondroitin).

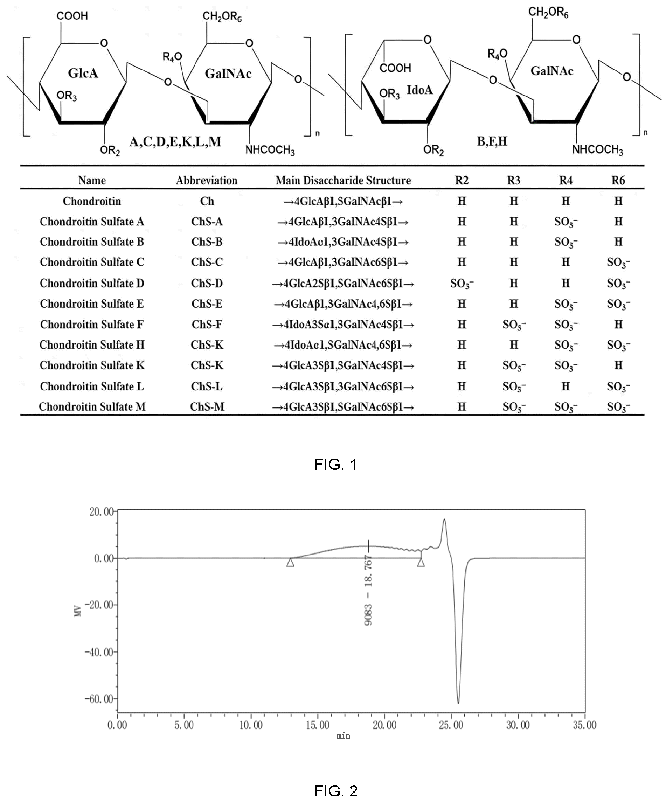

Molecular weight analysis: according to the Method for Determination of Molecular Weight of Low Molecular Weight Heparin, the molecular weight of sodium chondroitin obtained by the above-mentioned method was determined using the TSKgel G3000SWXL column. After determination, the average molecular weight of the sodium chondroitin was Mw=11.1 kDa (see FIG. 2, the retention time was 18.8 min).

### Example 2: Preparation 1 of Sodium Chondroitin Sulfate

(1) Sulfonation: 10 g of sodium chondroitin prepared in Example 1 was taken and dispersed with 50 mL of N, N-dimethylformamide, that is, W_{sodium chondroitin}: V_{organic solvent} = 1:5, g:ml; a sodium chondroitin dispersion was formed, and was preheated in an oil bath at 40°C for later use; and 10 g of pyridine sulfur trioxide complex was taken according to W_{sodium chondroitin}: W_{sulfonating reagent} =1:1, and was dispersed with 50 mL of formamide, and then the dispersion was added into the above-mentioned sodium chondroitin dispersion. The reaction was carried out under stirring in an oil bath at 40°C for 2 h. 0.7 L absolute ethanol was added to terminate the reaction. Centrifugation was carried out at 6000 rpm. precipitate was collected, and washed with 0.7 L absolute ethanol.
(2) Post-treatment: the washed precipitate was redissolved with 100 mL purified water. 1.5mL hydrogen peroxide was added, stirring was carried out at 25°C for 3 h to complete decolorization. The decolorized feed solution was spray-dried to obtain 11.8 g sodium chondroitin sulfate.

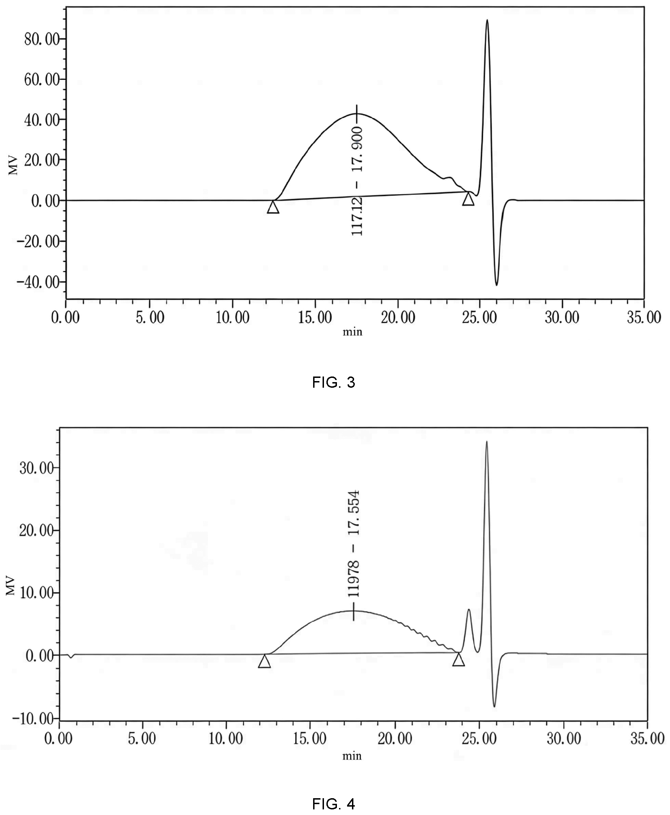

Molecular weight analysis: according to the Method for Determination of Molecular Weight of Low Molecular Weight Heparin, the molecular weight of sodium chondroitin sulfate prepared in Example 2 was determined using the TSKgel G3000SWXL column. After determination, the average molecular weight Mw of the sodium chondroitin sulfate obtained in Example 2 was 13.4 kDa (see FIG. 3, the retention time was 17.5 min).

### Example 3: Preparation 2 of Sodium Chondroitin Sulfate

(1) Sulfonation: 10 g of sodium chondroitin prepared in Example 1 was taken and dispersed with 50 mL of formamide, that is, W_{sodium chondroitin}: V_{organic solvent} =1:5, g:ml; a sodium chondroitin dispersion was formed, and was preheated in an oil bath at 40°C for later use; and 10 g of pyridine sulfur trioxide complex was taken according to W_{sodium chondroitin}: W_{sulfonating reagent} =1:1, and was dispersed with 50 mL of N, N-dimethylformamide, and then the dispersion was added into the above-mentioned sodium chondroitin dispersion. The reaction was carried out under stirring in an oil bath at 40°C for 2 h. 0.7 L absolute ethanol was added to terminate the reaction. Centrifugation was carried out at 6000 rpm. precipitate was collected, and washed with 0.7 L absolute ethanol.
(2) Post-treatment: the washed precipitate was redissolved with 100 mL purified water. 1.5mL hydrogen peroxide was added, stirring was carried out at 25°C for 3 h to complete decolorization. The decolorized feed solution was spray-dried to obtain 12.1 g sodium chondroitin sulfate. After determination, the average molecular weight Mw of the sodium chondroitin sulfate obtained in Example 3 was 13.7 kDa (see FIG. 4, the retention time was 17.6 min).

### Example 4: Preparation 3 of Sodium Chondroitin Sulfate

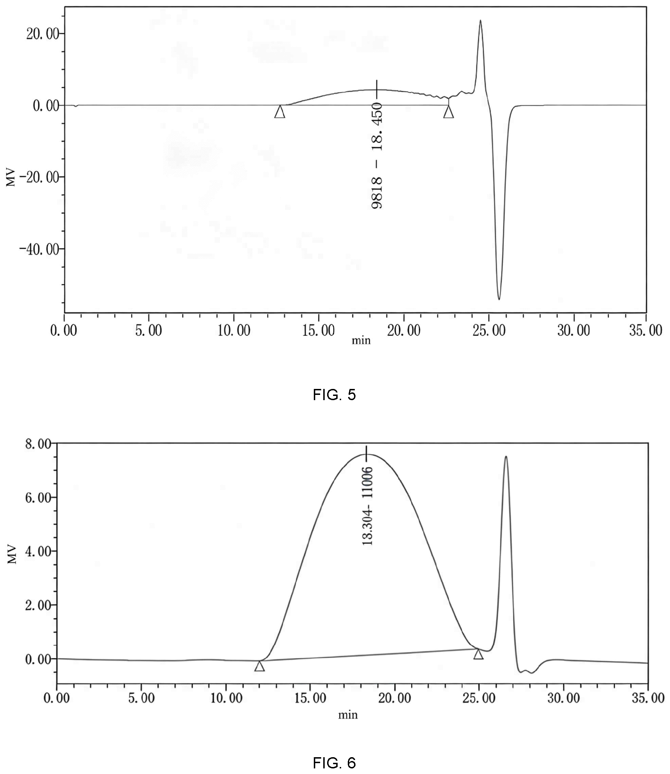

(1) Sulfonation: 10 g of sodium chondroitin prepared in Example 1 was taken and dispersed with 50 mL of formamide, that is, W_{sodium chondroitin}: V_{organic solvent} =1:5, g:ml; a sodium chondroitin dispersion was formed, and was preheated in an oil bath at 40°C for later use; and 10 g of pyridine sulfur trioxide complex was taken according to W_{sodium chondroitin}: W_{sulfonating reagent} =1:1, and was dispersed with 50 mL of formamide, and then the dispersion was added into the above-mentioned sodium chondroitin dispersion. The reaction was carried out under stirring in an oil bath at 40°C for 2 h. 0.7 L absolute ethanol was added to terminate the reaction. Centrifugation was carried out at 6000 rpm. precipitate was collected, and washed with 0.7 L absolute ethanol.
(2) Post-treatment: the washed precipitate was redissolved with 100 mL purified water. 1.5mL hydrogen peroxide was added, stirring was carried out at 25°C for 3 h to complete decolorization. The decolorized feed solution was spray-dried to obtain 11.2 g sodium chondroitin sulfate. After determination, the average molecular weight Mw of the sodium chondroitin sulfate obtained in Example 4 was 12.1 kDa (see FIG. 5, the retention time was 18.5 min).

### Example 5: Preparation 4 of Sodium Chondroitin Sulfate

(1) Sulfonation: 10 g of sodium chondroitin prepared in Example 1 was taken and dispersed with 50 mL of N, N-dimethylformamide, that is, W_{sodium chondroitin}: V_{organic solvent} =1:5, g:ml; a sodium chondroitin dispersion was formed, and was preheated in an oil bath at 40°C for later use; and 10 g of pyridine sulfur trioxide complex was taken according to W_{sodium chondroitin}: W_{sulfonating reagent} =1:1, and was dispersed with 50 mL of N, N-dimethylformamide, and then the dispersion was added into the above-mentioned sodium chondroitin dispersion. The reaction was carried out under stirring in an oil bath at 40°C for 2 h. 0.7 L absolute ethanol was added to terminate the reaction. Centrifugation was carried out at 6000 rpm. precipitate was collected, and washed with 0.7 L absolute ethanol.
(2) Post-treatment: the washed precipitate was redissolved with 100 mL purified water. 1.5mL hydrogen peroxide was added, stirring was carried out at 25°C for 3 h to complete decolorization. The decolorized feed solution was spray-dried to obtain 11.3 g sodium chondroitin sulfate. After determination, the average molecular weight Mw of the sodium chondroitin sulfate obtained in Example 5 was 12.3 kDa (see FIG. 6, the retention time was 18.3 min).

### Example 6: Preparation 5 of Sodium Chondroitin Sulfate

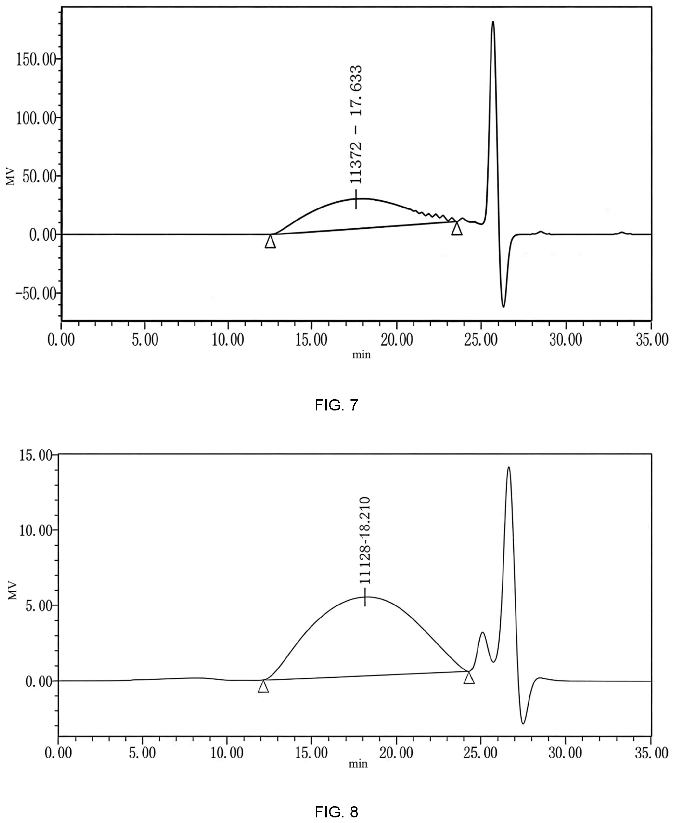

(1) Sulfonation: 10 g of sodium chondroitin prepared in Example 1 was taken and dispersed with 50 mL of formamide, that is, W_{sodium chondroitin}: V_{organic solvent} =1:5, g:ml; a sodium chondroitin dispersion was formed, and was preheated in an oil bath at 40°C for later use; and 50 g of pyridine sulfur trioxide complex was taken according to W_{sodium chondroitin}: W_{sulfonating reagent} =1:5, and was dispersed with 50 mL of formamide, and then the dispersion was added into the above-mentioned sodium chondroitin dispersion. The reaction was carried out under stirring in an oil bath at 40°C for 2 h. 0.7 L absolute ethanol was added to terminate the reaction. Centrifugation was carried out at 6000 rpm. precipitate was collected, and washed with 0.7 L absolute ethanol.
(2) Post-treatment: the washed precipitate was redissolved with 100 mL purified water. 1.5mL hydrogen peroxide was added, stirring was carried out at 25°C for 3 h to complete decolorization. The decolorized feed solution was spray-dried to obtain 11.5 g sodium chondroitin sulfate. After determination, the average molecular weight Mw of the sodium chondroitin sulfate obtained in Example 6 was 13.2 kDa (see FIG. 7, the retention time was 17.6 min).

### Example 7: Preparation 6 of Sodium Chondroitin Sulfate

(1) Sulfonation: 10 g of sodium chondroitin prepared in Example 1 was taken and dispersed with 50 mL of N, N-dimethylformamide, that is, W_{sodium chondroitin}: V_{organic solvent} =1:5, g:ml; a sodium chondroitin dispersion was formed, and was preheated in an oil bath at 40°C for later use; and 10 g of sulfur trioxide trimethylamine complex was taken according to W_{sodium chondroitin}: W_{sulfonating reagent} =1:1, and was dispersed with 50 mL of formamide, and then the dispersion was added into the above-mentioned sodium chondroitin dispersion. The reaction was carried out under stirring in an oil bath at 50°C for 6 h. 0.7 L absolute ethanol was added to terminate the reaction. Centrifugation was carried out at 6000 rpm. precipitate was collected, and washed with 0.7 L absolute ethanol.
(2) Post-treatment: the washed precipitate was redissolved with 100 mL purified water. Filtration was repeated for 5 times with 6 layers of activated carbon fiber membranes to complete decolorization. The decolorized feed solution was freeze-dried to obtain 11.6 g sodium chondroitin sulfate. After determination, the average molecular weight Mw of the sodium chondroitin sulfate obtained in Example 7 was 12.8 kDa (see FIG. 8, the retention time was 18.2 min).

### Example 8: Preparation 7 of Sodium Chondroitin Sulfate

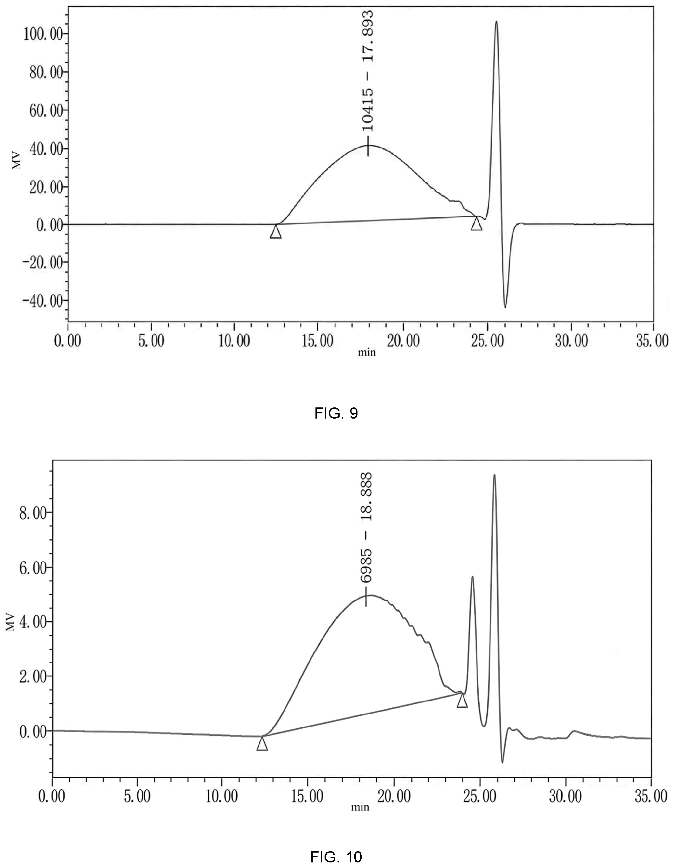

(1) Sulfonation: 10 g of sodium chondroitin prepared in Example 1 was taken and dispersed with 50 mL of N, N-dimethylformamide, that is, W_{sodium chondroitin}: V_{organic solvent} =1:5, g:ml; a sodium chondroitin dispersion was formed, and was preheated in an oil bath at 40°C for later use; and 10 g of concentrated sulfuric acid was taken according to W_{sodium chondroitin}: W_{sulfonating reagent} =1:1, and was dispersed with 50 mL of formamide, and then the dispersion was added into the above-mentioned sodium chondroitin dispersion. The reaction was carried out under stirring in an oil bath at 30°C for 4 h. 0.7 L absolute ethanol was added to terminate the reaction. Centrifugation was carried out at 6000 rpm. precipitate was collected, and washed with 0.7 L absolute ethanol.
(2) Post-treatment: the washed precipitate was redissolved with 100 mL purified water. Filtration was repeated for 5 times with 6 layers of activated carbon fiber membranes to complete decolorization. The decolorized feed solution was freeze-dried to obtain 11.2 g sodium chondroitin sulfate. After determination, the average molecular weight Mw of the sodium chondroitin sulfate obtained in Example 8 was 12.2 kDa (see FIG. 9, the retention time was 17.9 min).

### Example 9: Preparation 8 of Sodium Chondroitin Sulfate

(1) Sulfonation: 10 g of sodium chondroitin prepared in Example 1 was taken and dispersed with 50 mL of N, N-dimethylformamide, that is, W_{sodium chondroitin}: V_{organic solvent} =1:5, g:ml; a sodium chondroitin dispersion was formed, and was preheated in an oil bath at 40°C for later use; and 5 g of pyridine sulfur trioxide complex was taken according to W_{sodium chondroitin}: W_{sulfonating reagent} =1:0.5, and was dispersed with 50 mL of formamide, and then the dispersion was added into the above-mentioned sodium chondroitin dispersion. The reaction was carried out under stirring in an oil bath at 40°C for 2 h. 0.7 L absolute ethanol was added to terminate the reaction. Centrifugation was carried out at 6000 rpm. precipitate was collected, and washed with 0.7 L absolute ethanol.
(2) Post-treatment: the washed precipitate was redissolved with 100 mL purified water. Filtration was repeated for 5 times with 6 layers of activated carbon fiber membranes to complete decolorization. The decolorized feed solution was freeze-dried to obtain 10.9 g sodium chondroitin sulfate. After determination, the average molecular weight Mw of the sodium chondroitin sulfate obtained in Example 9 was 11.9 kDa (see FIG. 10, the retention time was 18.3 min).

### Comparative Example 1

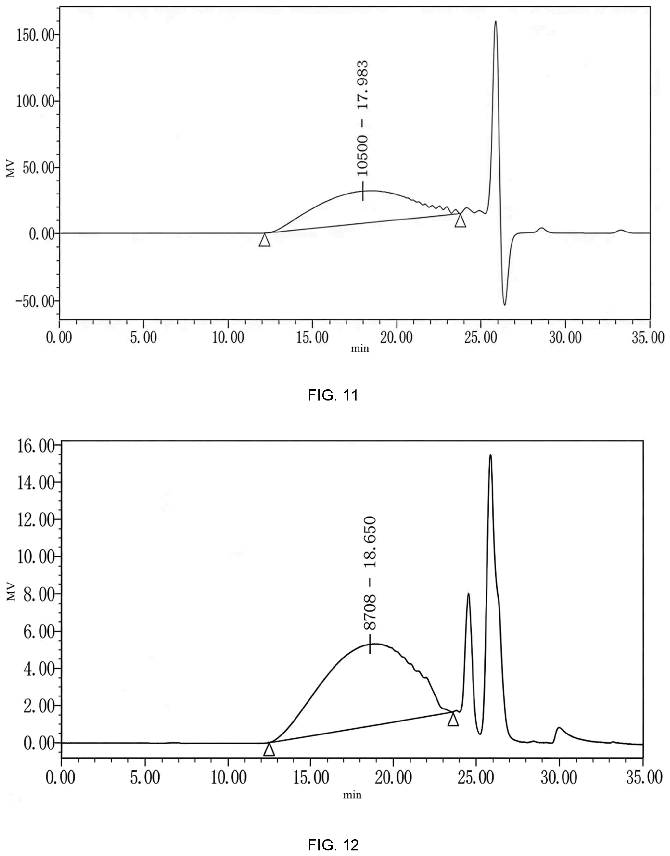

(1) Sulfonation: 10 g of sodium chondroitin prepared in Example 1 was taken and dispersed with 50 mL of N, N-dimethylformamide, that is, W_{sodium chondroitin}: V_{organic solvent} =1:5, g:ml; a sodium chondroitin dispersion was formed, and was preheated in an oil bath at 40°C for later use; and 10 g of chlorosulfonic acid was taken according to W_{sodium chondroitin}: W_{sulfonating reagent} =1:1, and was dispersed with 50 mL of formamide, and then the dispersion was added into the above-mentioned sodium chondroitin dispersion. The reaction was carried out under stirring in an oil bath at 40°C for 2 h. 0.7 L absolute ethanol was added to terminate the reaction. Centrifugation was carried out at 6000 rpm. precipitate was collected, and washed with 0.7 L absolute ethanol.
(2) Post-treatment: the washed precipitate was redissolved with 100 mL purified water. 1.5mL hydrogen peroxide was added, stirring was carried out at 25°C for 3 h to complete decolorization. The decolorized feed solution was spray-dried to obtain 11.4 g sodium chondroitin sulfate. After determination, the average molecular weight Mw of the sodium chondroitin sulfate obtained in Comparative Example 1 was 12.5 kDa (see FIG. 11, the retention time was 18.0 min).

### Comparative Example 2

(1) Sulfonation: 10 g of sodium chondroitin prepared in Example 1 was taken and dispersed with 50 mL of N, N-dimethylformamide, that is, W_{sodium chondroitin}: V_{organic solvent} =1:5, g:ml; a sodium chondroitin dispersion was formed, and was preheated in an oil bath at 40°C for later use; and 3 g of pyridine sulfur trioxide complex was taken according to W_{sodium chondroitin}: W_{sulfonating reagent} =1:0.3, and was dispersed with 50 mL of formamide, and then the dispersion was added into the above-mentioned sodium chondroitin dispersion. The reaction was carried out under stirring in an oil bath at 40°C for 2 h. 0.7 L absolute ethanol was added to terminate the reaction. Centrifugation was carried out at 6000 rpm. precipitate was collected, and washed with 0.7 L absolute ethanol.
(2) Post-treatment: the washed precipitate was redissolved with 100 mL purified water. 1.5mL hydrogen peroxide was added, stirring was carried out at 25°C for 3 h to complete decolorization. The decolorized feed solution was spray-dried to obtain 10.5 g sodium chondroitin sulfate. After determination, the average molecular weight Mw of the sodium chondroitin sulfate obtained in Comparative Example 2 was 11.3 kDa (see FIG. 12, the retention time was 18.7 min).

### Result Analysis

### 1. Assay Analysis of Sodium Chondroitin Sulfate Prepared in Examples 2 to 9

According to the analytical method specified in Part II, Page 1595 of the Chinese Pharmacopoeia 2020 Edition, the unsulfated sodium chondroitin obtained in Example 1 and the sodium chondroitin sulfate prepared in Examples 2 to 9 and Comparative Examples 1 to 2 was enzymatically digested with chondroitinase ABC, and macromolecular chondroitin sulfate was enzymatically digested into disaccharide units (→GalA-GalNAc→). The HPLC analysis was performed using the HypersilSAX column at a detection wavelength of 232 nm. The peaks of the disaccharide units with sulfonation at different positions appeared sequentially, thereby allowing for the analysis of the sulfation of chondroitin sulfate.

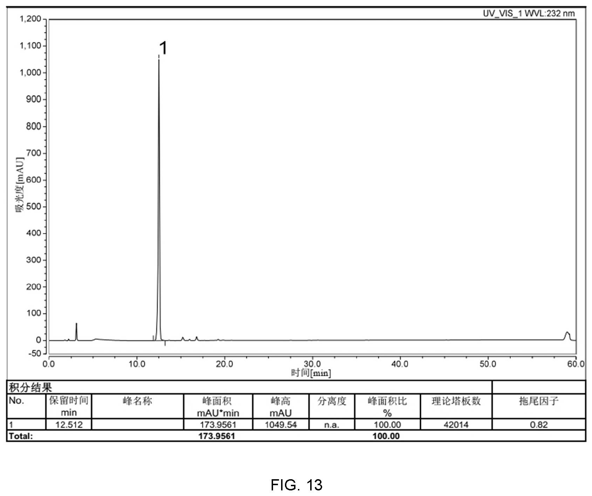

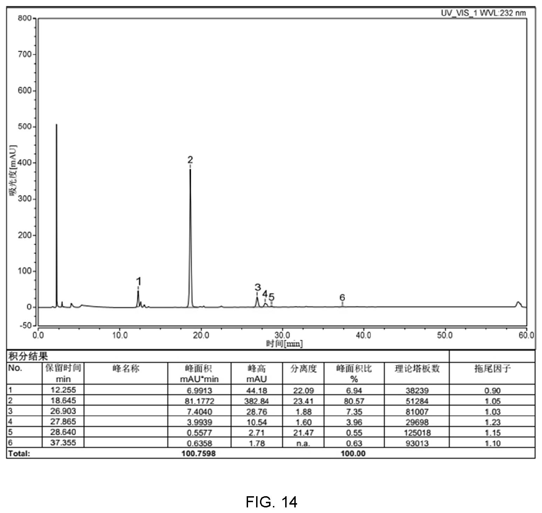

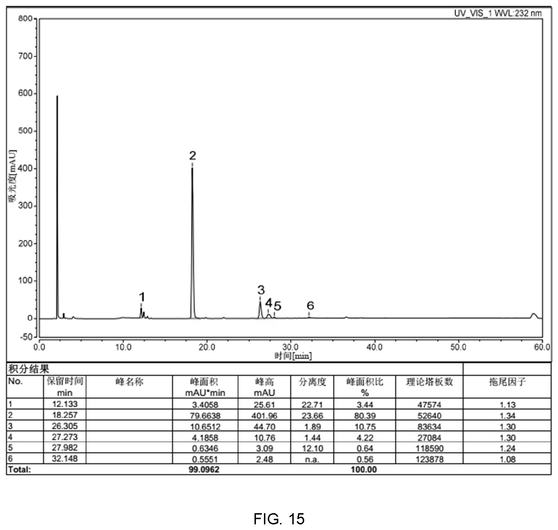

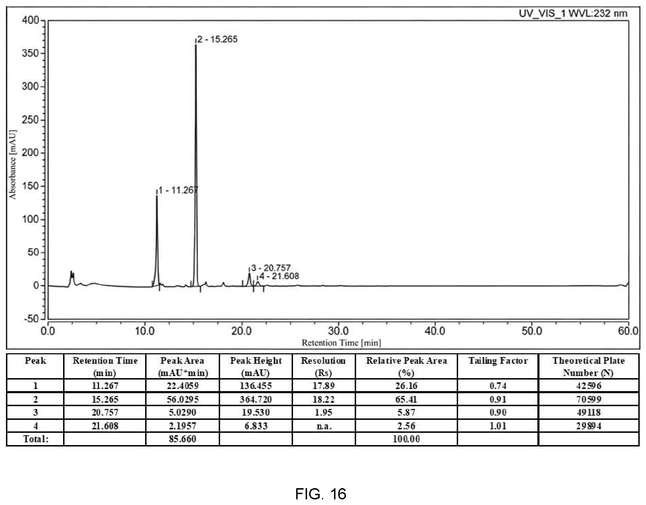

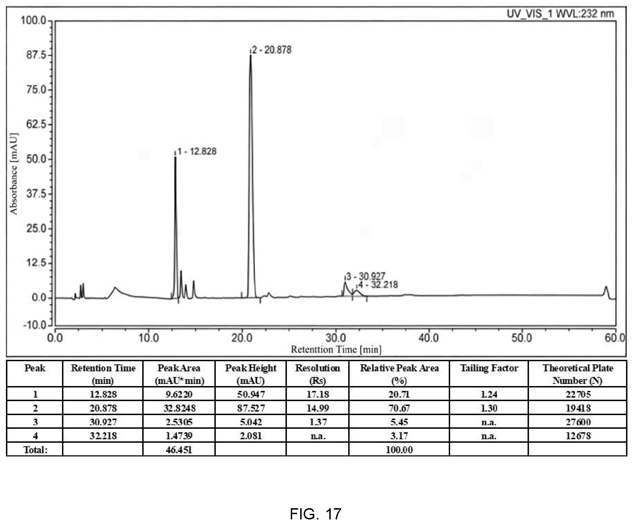

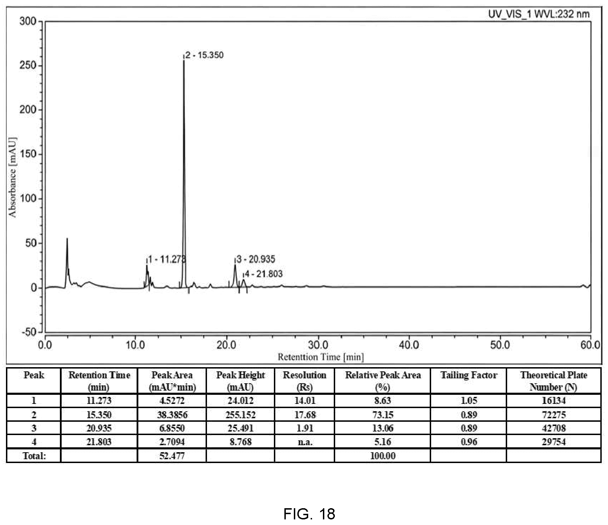

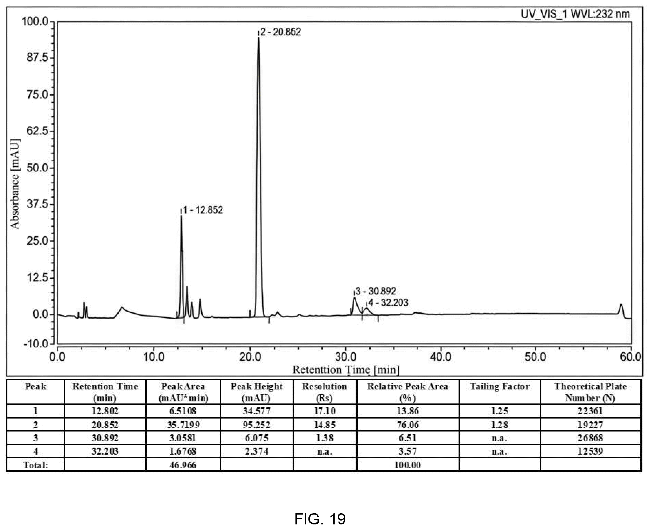

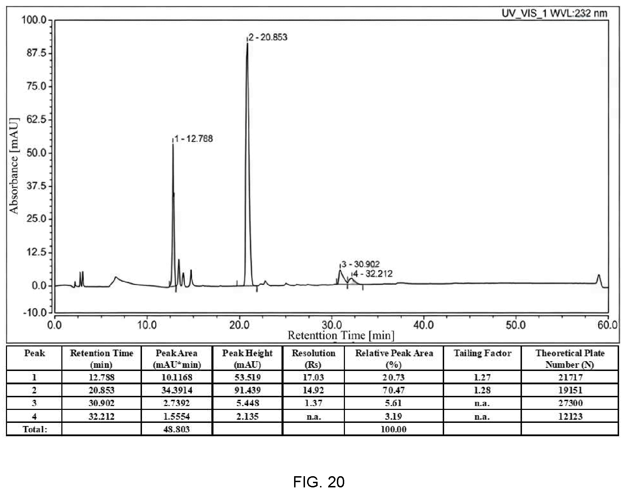

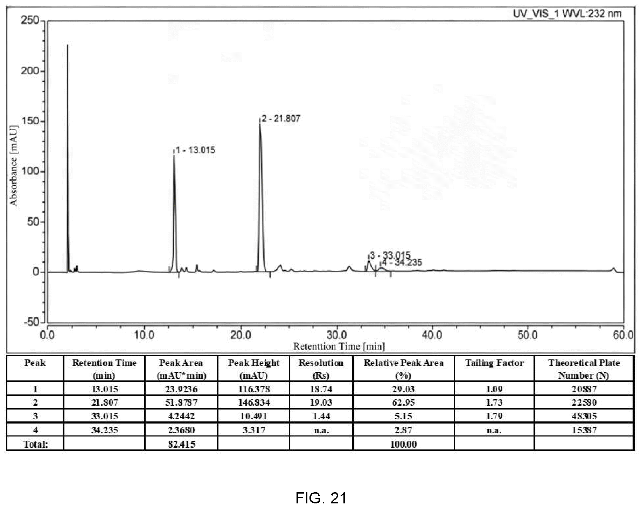

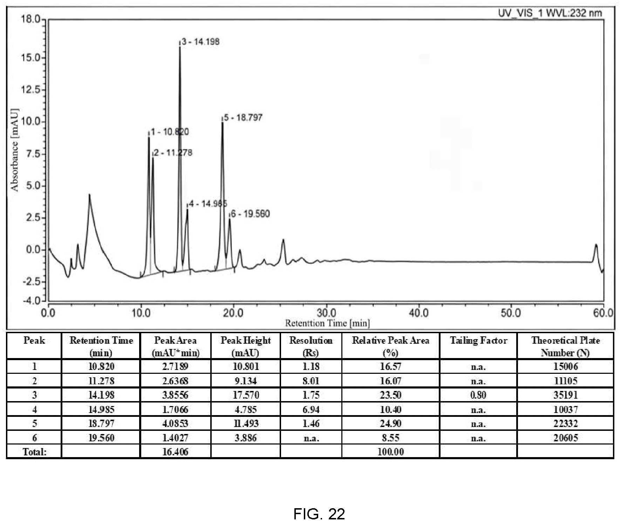

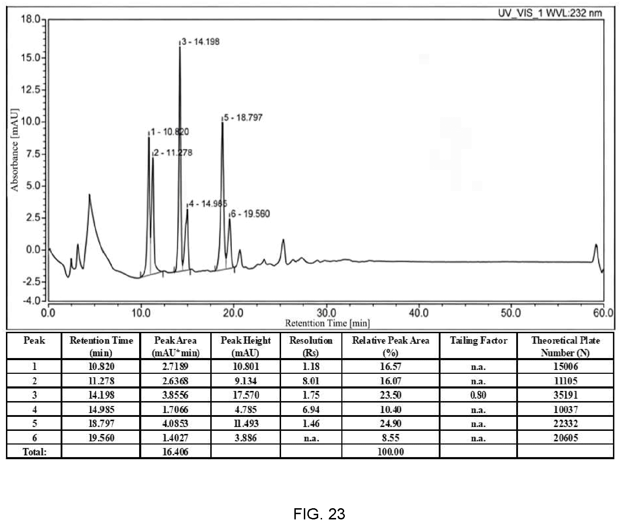

See table 1 and FIG. 13 to FIG. 23 for the analysis results. Table 1 shows the disaccharide distribution of sodium chondroitin sulfate prepared in Examples 2 to 9 and Comparative Examples 1 to 2. FIG. 13 shows the analysis results of the disaccharide content of the sodium chondroitin obtained in Example 1. FIG. 14 shows the analysis results of the disaccharide distribution of the sodium chondroitin sulfate prepared in Example 2. FIG. 15 shows the analysis results of the disaccharide distribution of the sodium chondroitin sulfate prepared in Example 3. FIG. 16 shows the analysis results of the disaccharide distribution of the sodium chondroitin sulfate prepared in Example 4. FIG. 17 shows the analysis results of the disaccharide distribution of the sodium chondroitin sulfate prepared in Example 5. FIG. 18 shows the analysis results of the disaccharide distribution of the sodium chondroitin sulfate prepared in Example 6. FIG. 19 shows the analysis results of the disaccharide distribution of the sodium chondroitin sulfate prepared in Example 7. FIG. 20 shows the analysis results of the disaccharide distribution of the sodium chondroitin sulfate prepared in Example 8. FIG. 21 shows the analysis results of the disaccharide distribution of the sodium chondroitin sulfate prepared in Example 9. FIG. 22 shows the analysis results of the disaccharide distribution of the sodium chondroitin sulfate prepared in Comparative Example 1. FIG. 23 shows the analysis results of the disaccharide distribution of the sodium chondroitin sulfate prepared in Comparative Example 2.

**Table 1 Sulfation of Chondroitin Sulfate**

| **Distribution** | **0S-CS** | **6S-CS** | **2,6S-CS** | **4,6S-CS** | **2,4S-CS** | **Sulfonation rate** | **Overall sulfonation rate at position 6** |
|---|---|---|---|---|---|---|---|
| Example 2 | 6.94% | 80.57% | 7.35% | 3.96% | 0.63% | 93.02% | 99.32% |
| Example 3 | 3.44% | 80.39% | 10.75% | 4.22% | 0.56% | 96.54% | 99.42% |
| Example 4 | 26.16% | 65.41% | 5.87% | 2.56% | - | 73.84% | 100% |
| Example 5 | 20.71% | 70.67% | 5.45% | 3.17% | - | 79.29% | 100% |
| Example 6 | 8.63% | 73.15% | 13.06% | 5.16% | - | 91.37% | 100% |
| Example 7 | 13.86% | 76.06% | 6.51% | 3.57% | - | 86.14% | 100% |
| Example 8 | 20.73% | 70.47% | 5.61% | 3.19% | - | 79.27% | 100% |
| Example 9 | 29.03% | 62.95% | 5.15% | 2.87% | - | 70.97% | 100% |
| Comparative Example 1 | 16.57% | 23.50% | 10.40% | 24.90% | 8.55% | 80.26% | 87.31% |
| Comparative Example 2 | 49.48% | 48.91% | 1.61% | - | - | 50.52% | 100% |
| 1. The sulfonation rate is the proportion of all final products that have undergone the sulfonation reaction, and is calculated as the following calculation formula: sulfonation rate =1-(0S-CS %)/(0S-CS %+6S-CS %+2,6S-CS %+4,6S-CS %+2,4S-CS %)*100%. | | | | | | | |
| 2. The overall sulfonation rate at position 6 is the proportion of final products with sulfonation at position 6 (including sulfonation at position 6, positions 2 and 6, and positions 4 and 6) in final products that have undergone the sulfonation reaction, and is calculated as the following calculation formula: overall sulfonation rate at position 6 =(6S-CS %+2,6S-CS %+4,6S-CS %)/(6S-CS %+2,6S-CS %+4,6S-CS %+2,4S-CS %)*100%. | | | | | | | |
| 3. The proportion of impurity peaks was 0.55% in Example 2. The proportion of impurity peaks was 0.64% in Example 4. The proportion of solvent peaks was 16.07% in Comparative Example 2. No further separation and identification was performed on the impurity peaks in the present disclosure. | | | | | | | |

The results showed that the chondroitin sulfate obtained in Examples 2 to 9 could be recognized and enzymatically digested by chondroitinase ABC. From the perspective of enzymatic digestion products, the sulfonation reaction in the method provided in the present disclosure was relatively thorough. In each preparation example, no more than 30% of chondroitin (i.e., 0S-CS) remained unsulfated, and the sulfonation rate reached up to 70% or above. Particularly in Examples 2 to 3, the sulfonation rate reached up to 90% or above (for example, 0S-CS % in Example 2 was only 6.94%, and 0S-CS % in Example 3 was only 3.44%), and the vast majority of sulfonation occurred at position 6 of GalNAc. For example, in Example 2 and Example 3, sulfated products were mostly distributed as chondroitin sulfate with independent sulfonation at position 6 (i.e., 6S-CS, with a disaccharide structure of 4GlcAβ1,3GalNAc6Sβ1), chondroitin sulfate with sulfonation at positions 2 and 6 (i.e., 2,6S-CS, with a disaccharide structure of 4GlcA2Sβ1,3GalNAc6Sβ1), and chondroitin sulfate with sulfonation at positions 4 and 6 (i.e., 4,6S-CS, with a disaccharide structure of 4GlcAβ1,3GalNAc4,6Sβ1), with less than 1% being chondroitin sulfate with sulfonation at positions 2 and 4 (i.e., 2,4S-CS, with a disaccharide structure of 4GlcA2Sβ1,3GalNAc4Sβ1). In Examples 4 to 9, all products were sulfated at position 6 of GalNAc.

The distribution of sulfonation products is uniform. The proportion of products with independent sulfonation at position 6 of GalNAc (i.e., 6S-CS) was up to 60% or above. For example, the proportion of products with independent sulfonation at position 6 was 80.57% in Example 2, the proportion of products with independent sulfonation at position 6 was 80.69% in Example 3, the proportion of products with independent sulfonation at position 6 was 65.41% in Example 4, the proportion of products with independent sulfonation at position 6 was 70.67% in Example 5, the proportion of products with independent sulfonation at position 6 was 73.15% in Example 6, the proportion of products with independent sulfonation at position 6 was 76.06% in Example 7, the proportion of products with independent sulfonation at position 6 was 70.47% in Example 8, and the proportion of products with independent sulfonation at position 6 was 62.95% in Example 9, indicating that the preparation method provided in the present disclosure can achieve a high proportion of directional sulfonation of chondroitin at position 6, and can stably and effectively control the proportion of the products with independent sulfonation at position 6 of GalNAc in final products to be 60% or above. Particularly the proportion of the products with independent sulfonation at position 6 of GalNAc in the final products can be controlled very well to be between 60% to 85%. In actual production, a final product with a desired proportion can be obtained according to product requirements.

In addition, the sulfonation process in the preparation method provided in the present disclosure is mild, and the final product does not undergo structural modifications that could affect natural enzyme recognition and enzymatic digestion.

As can be seen from Comparative Example 1 compared with Example 2, the proportion of the products with independent sulfonation at position 6 decreased to 23.50% after changing the type of the sulfonating reagent, indicating that the type of the sulfonating reagent in the preparation method of the present disclosure can significantly determine the degree of directional sulfonation of sodium chondroitin at position 6. As can be seen from Comparative Example 2 compared with Example 2, the sulfonation rate was reduced to 50.52% by reducing the amount of the sulfonating reagent, indicating that the addition ratio of the sulfonating reagent in the preparation method of the present disclosure has a great influence on the sulfonation rate. This also directly indicates that the preparation method provided in the present disclosure can control the proportion of the products with independent sulfonation at position 6 of GalNAc in the final product to be 60% or above.

### 2. 13C NMR Analysis of Sodium Chondroitin Sulfate

Model of nuclear magnetic resonance spectrometer: AV500 (CAq08).

The detection conditions are as follows: magnetic field intensity (FS):125 MHz; the number of scans (ns): 12288; temperature (TE): about 40°C (313.2 K); acquisition time (AQ): 1.1 S; Delay time (D1): 2.0 S; spectral center (O1P): 100.0 ppm; decoupling center (O2P): 4.0 ppm; spectral width (SW): 220 ppm to 240 ppm; pulse (PUL): 30; exponential line broadening function (LB): 1.0 Hz; nuclear magnetic tube diameter: 5 mm; and acquisition method: D_GLP_E.glp.

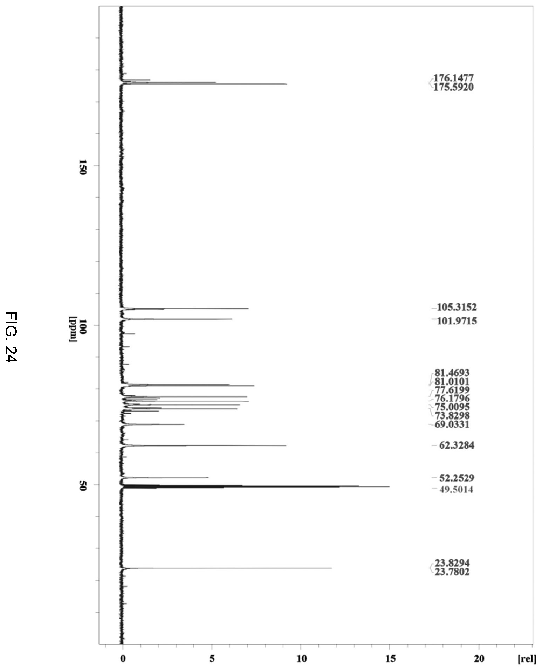

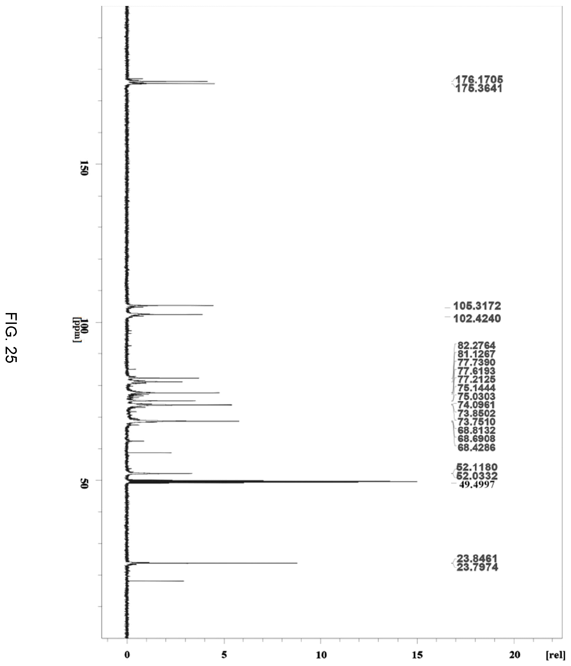

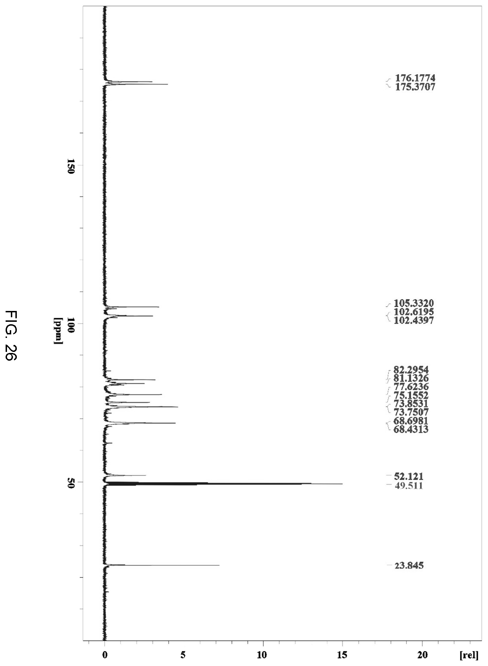

See FIG. 24 to FIG. 26 for the analysis results. FIG. 24 to FIG. 26 show the NMR carbon spectra of the sodium chondroitin sulfate prepared in Examples 2 to 4, respectively. The peak at 49.5 ppm is the methanol reference peak. There are the main characteristic peaks of CS-C in the carbon spectra, where the peak at 68.7 ppm is the characteristic signal peak of the sulfated carbon 6 in CS-C, and the peaks at 176.2 ppm and 23.8 ppm are the characteristic signal peaks of carbon 7 and carbon 8 in GalNAc, respectively.

The results showed that the carbon chain structure of the sodium chondroitin sulfate obtained in Examples 2 to 4 was consistent with that of CS-C, proving that chondroitin sulfate with sulfonation at position 6 of GalNAc was obtained using the method of the present disclosure.

In addition, as can be seen from Examples 2 to 9 (see FIG. 3 to FIG. 10) that the average molecular weight Mw of the sodium chondroitin sulfate obtained via the sulfonation of sodium chondroitin using the method provided in the present disclosure showed little variation, indicating that the sulfonation method provided in the present disclosure has a mild reaction, and despite undergoing a chemical reaction process, this process causes minimal damage to the skeleton structure of disaccharide. As can be seen from the average molecular weight Mw of the obtained sodium chondroitin sulfate, the batch-to-batch average molecular weight Mw distribution of sodium chondroitin sulfate obtained using the sulfonation method provided in the present disclosure is stable, indicating that the sulfonation method provided in the present disclosure is stable in stable batch-to-batch operation, and is not highly dependent on operating environments, operating methods, or dosages and proportions of compounds.

To sum up, the present disclosure can realize the directional site-specific sulfation of a final product via a simple chemical sulfonation process by taking unsulfated sodium chondroitin which as a raw material, thereby obtaining a sulfonated product at position 6 with stable molecular weight and high proportion.

The examples provided above are not intended to limit the scope of the present disclosure, and the described steps are not intended to restrict their execution order. Any obvious improvement made by those skilled in the art to the present disclosure by combining the existing common general knowledge shall also falls within the scope of protection defined by the claims of the present disclosure.

## Claims

1. A preparation method for sodium chondroitin sulfate, wherein the method comprises the following steps of:
step 1) sulfonation: dispersing unsulfated sodium chondroitin with an organic solvent, adding a sulfonating reagent so as to carry out a sulfonation reaction, and then terminating the reaction, carrying out centrifugation, and collecting precipitate; and
step 2) post-treatment: decolorizing and drying the precipitate collected in step 1 to obtain sodium chondroitin sulfate,
wherein:
an average molecular weight of the unsulfated sodium chondroitin in step 1 is 5 kDa to 30 kDa;
the sulfonating reagent in step 1 is preferably selected from one or more of concentrated sulfuric acid, sulfur trioxide trimethylamine complex and pyridine sulfur trioxide complex;
the organic solvent in step 1 is selected from one or more of N, N-dimethylformamide or formamide; and
a proportion of the sodium chondroitin sulfate with independent sulfonation at position 6 of GalNAc in the sodium chondroitin sulfate obtained in step 2 is 60% or above, and an average molecular weight of the sodium chondroitin sulfate obtained in step 2 is 5 kDa to 30 kDa.

2. The preparation method according to claim 1, wherein a weight ratio of the unsulfated sodium chondroitin to the sulfonating reagent in step 1 is W_{sodium chondroitin}: W_{sulfonating reagent} ≤1:0.5.

3. The preparation method according to any one of claims 1 to 2, wherein a weight-volume ratio of the unsulfated sodium chondroitin to the organic solvent in step 1 is W_{sodium chondroitin}: V_{organic solvent} =1:(4 to 50), g/ml.

4. The preparation method according to any one of claims 1 to 3, wherein a temperature for the sulfonation reaction in step 1 is 20°C to 50°C.

5. The preparation method according to any one of claims 1 to 4, wherein a time of the sulfonation reaction in step 1 is 0.5 h to 6 h.

6. The preparation method according to any one of claims 1 to 5, wherein the unsulfated sodium chondroitin in step 1 is unsulfated sodium chondroitin obtained via microbial fermentation.

7. The preparation method according to any one of claims 1 to 6, wherein the unsulfated sodium chondroitin in step 1 is obtained by fermentation using *Escherichia coli* DH001, the *E. coli* DH001 being deposited on September 28, 2024 at the China General Microbiological Culture Collection Center, with an accession number of CGMCC No.32081, and a deposit address of No. 3, Beichen West Road 1, Chaoyang District, Beijing.

8. A use of the preparation method for chondroitin sulfate according to any one of claims 1 to 7 in preparation of sodium chondroitin sulfate with sulfation at position 6 of GalNAc, wherein the sodium chondroitin sulfate with sulfation at position 6 of GalNAc is preferably sodium chondroitin sulfate with independent sulfonation at position 6 of GalNAc.

9. A preparation method for sodium chondroitin sulfate with an independent sulfonation proportion of more than 60% at position 6 of GalNAc, wherein an average molecular weight of the sodium chondroitin sulfate is 5 kDa to 30 kDa, and the method comprises sulfonation and post-treatment processes according to any one of claims 1 to 7.

10. Sodium chondroitin sulfate with an independent sulfonation proportion of 60% to 85% at position 6 of GalNAc, wherein the sodium chondroitin sulfate is obtained by sulfating unsulfated sodium chondroitin obtained by fermentation using *E. coli* DH001, the *E. coli* DH001 being deposited on September 28, 2024 at the China General Microbiological Culture Collection Center, with an accession number of CGMCC No.32081, and a deposit address of No. 3, Beichen West Road 1, Chaoyang District, Beijing.

11. The sodium chondroitin sulfate according to claim 10, wherein sulfation comprises a sulfonation process according to any one of claims 1 to 4.

12. The sodium chondroitin sulfate according to claim 10, wherein sulfation comprises a post-treatment process according to any one of claims 1 to 4.
